# EUROPEAN PATENT SPECIFICATION

(11) **EP 0 385 321 B1**
(45) Date of publication and mention of the grant of the patent: **03.12.1997**
(21) Application number: 90103625.1
(22) Date of filing: 24.02.1990
(51) Int. Cl.: F02P 17/00, G02B 23/26

(54) **Endoscope apparatus with holding means for inspecting reciprocating engines and rotary engines through an ignition plug hole**
Endoskop mit Halter zur Untersuchung von Rotations- und Kolbenmotoren durch eine Zündkerzenöffnung
Endoscope avec dispositif de fixation pour l'examen de moteurs à pistons ou de moteurs rotatifs par un trou de bougie d'allumage

(30) Priority: 27.02.1989 JP 47868/89; 13.10.1989 JP 266804/89
(43) Date of publication of application: 05.09.1990
(73) Proprietor: OLYMPUS OPTICAL CO., LTD., Tokyo 151 (JP)
(72) Inventor: Okada, Minoru, Sagamihara-shi, Kanagawa-ken (JP); Motoki, Nobuyuki, Ishikawa-machi, Hachioji-shi, Tokyo (JP); Ishigami, Takakazu, Tama-shi, Tokyo (JP); Yamamoto, Tsutomu, Hachioji-shi, Tokyo (JP); Fuse, Eiichi, Hachioji-shi, Tokyo (JP); Hayashi, Masaaki, Hachioji-shi, Tokyo (JP)
(74) Representative: Kahler, Kurt, Dipl.-Ing.

(56) References cited:
- DE-A- 3 150 114
- GB-A- 489 166
- US-A- 2 196 936
- US-A- 2 413 126
- US-A- 3 690 775
- US-A- 4 011 017
- US-A- 4 711 524

## Description

### Field and Background of the Invention:

This invention relates to an endoscope apparatus for inspecting the interior of an engine.

Recently, there are extensively used industrial endoscopes whereby the interiors of boilers, turbines, engines, chemical plants and the like can be observed and inspected by inserting an elongate insertable part into them.

Particularly, with an endoscope for engines, it has been desired to inspect engines without greatly disassembling the combustion chamber to see if the piston head is burned, if the inside wall of the cylinder is scratched, if foreign matters are deposited on the suction and exhaust valves, if the gasket between the cylinder block and cylinder head is deformed and the like. In one of the methods, the ignition plug is removed, the endoscope is inserted into the combustion chamber through the hole and the interior is observed. However, it has been difficult for one inspector to inspect it while stably and stationarily holding the endoscope at the tip in a desired position.

By the way, in the publication of Japanese Patent Application Laid Open No.294341/1986 is shown a method of inspecting suction and exhaust valves whereby, in an internal combustion engine having exhaust and suction valves, an inspecting port capable of being opened and closed is provided in the exhaust or suction path and an endoscope utilizing a fiber scope or the like is inserted into the inspecting port to inspect the states of the valve rods and valve seats.

Furthermore, US-A-4,011,017 discloses an endoscope apparatus which essentially comprises an endoscope and a holding device mounted at an inserting hole of a combustion chamber of an engine. The holding device is equipped with an elastic fixing means for holding an insertable part of the endoscope. In operation, the insertable part of the endoscope is inserted in the holding device in which a locking collar is located in a first position in which the insertable part of the endoscope can be freely moved in and out and rotated about its axis. When the insertable part of the endoscope has been located in its desired viewing position, the operator may secure it by rotating the locking collar into a second position in which resilient washers are in gripping engagement with the insertable part of the endoscope. In case the viewing position is to be changed, the locking collar has to be operated again.

### Object and Summary of the Invention:

An object of the present invention is to provide an endoscope holding apparatus whereby an endoscope can be stably and stationarily held at the tip in a desired position within an engine combustion chamber without the need of a locking means.

This object is solved by the features described in claim 1.

Particular embodiments of the invention are set out in the dependent claims.

### Brief Description of the Drawings:

Figs. 1 to 6 relate to the first embodiment of the present invention.

Fig. 1 is an explanatory view of an endoscope holding apparatus.

Fig. 2 is an explanatory view of an entire endoscope apparatus.

Fig. 3 is an explanatory view of an attachment to be fitted to an endoscope.

Fig. 4 is an explanatory view of a fixing spring.

Fig. 5 is an explanatory view of an electronic endoscope apparatus.

Fig. 6 is an explanatory view of a rigid endoscope apparatus.

Fig. 7 relates to the second embodiment of the present invention and is an enlarged view of a spark plug fixing female screw part.

Fig. 8 relates to the third embodiment of the present invention and is a sectioned view of a fixing body.

Fig. 9 relates to the fourth embodiment of the present invention and is a sectioned view of a fixing member.

Figs. 10 to 17 relate to the fifth embodiment of the present invention.

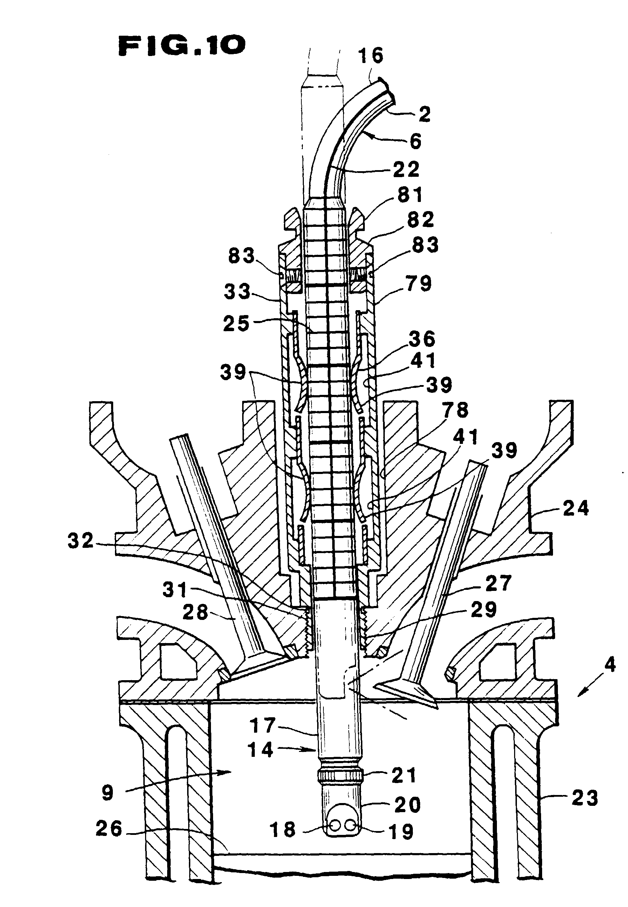

Fig. 10 is an explanatory view of an endoscoope holding apparatus.

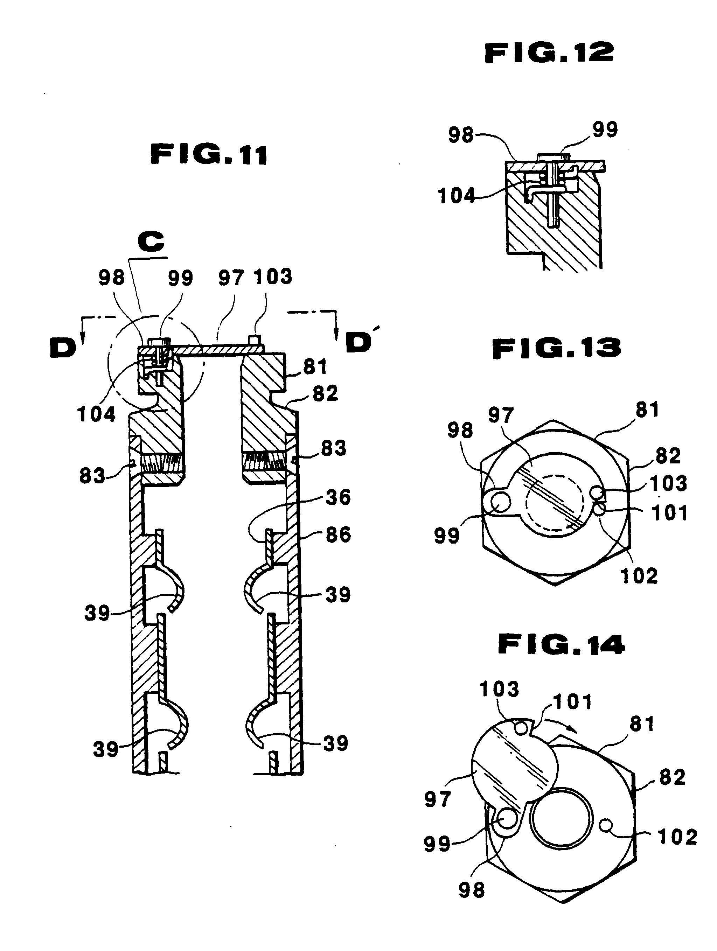

Fig. 11 is an explanatory view of a holding apparatus provided with a lid.

Fig. 12 is a detailed view of the part C in Fig. 11.

Fig. 13 is a view indicated by the arrow in the direction of D-D' in in Fig. 11.

Fig. 14 is an explanatory view with the lid opened.

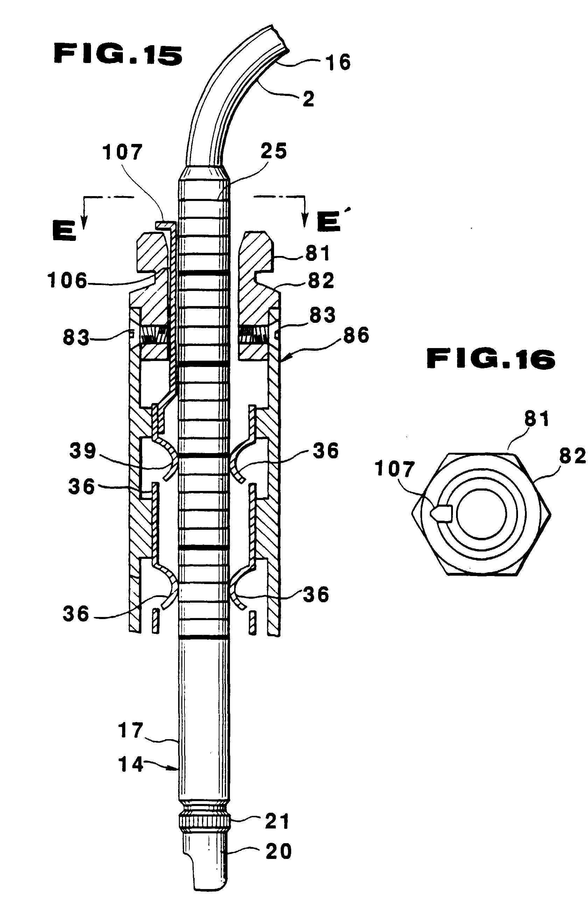

Fig. 15 is an explanatory view of a holding apparatus having an observing direction indicating member.

Fig. 16 is a view indicated by the arrow in the direction of E-E' in in Fig. 15.

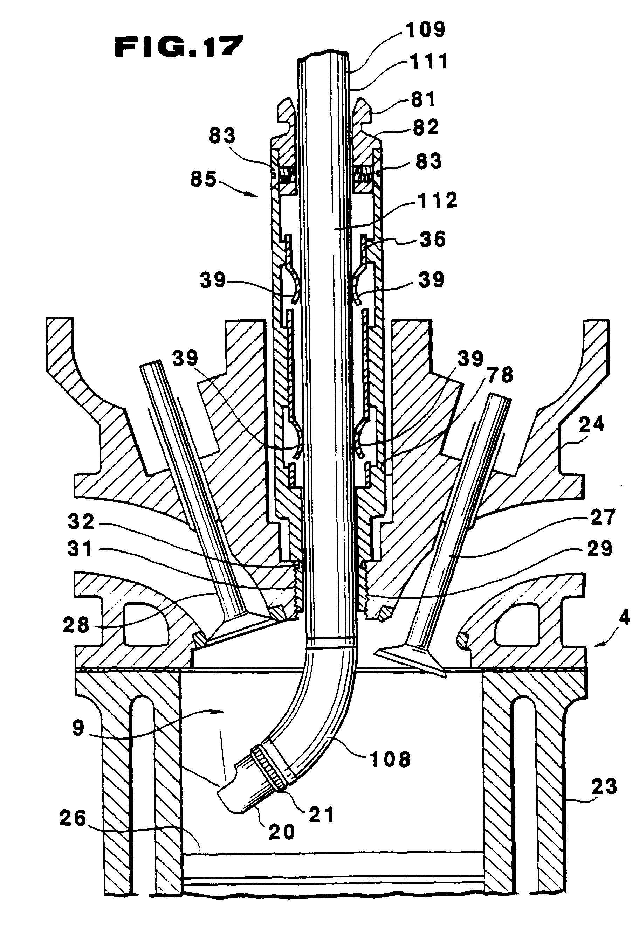

Fig. 17 is an explanatory view of the case that an endoscope having a curvable part is used together with a holding apparatus.

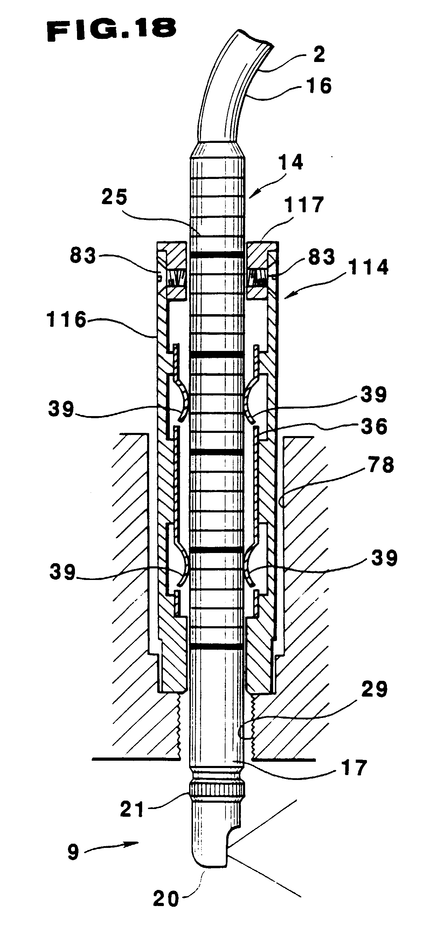

Fig. 18 relates to the sixth embodiment of the present invention and is an explanatory view of a holding apparatus.

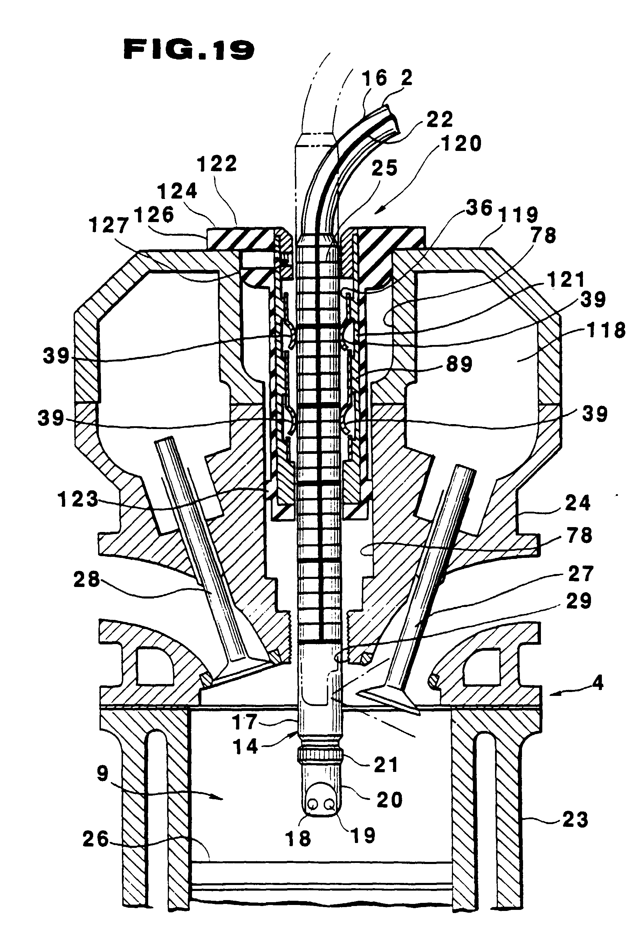

Fig. 19 relates to the seventh embodiment of the present invention and is an explanatory view of a holding apparatus.

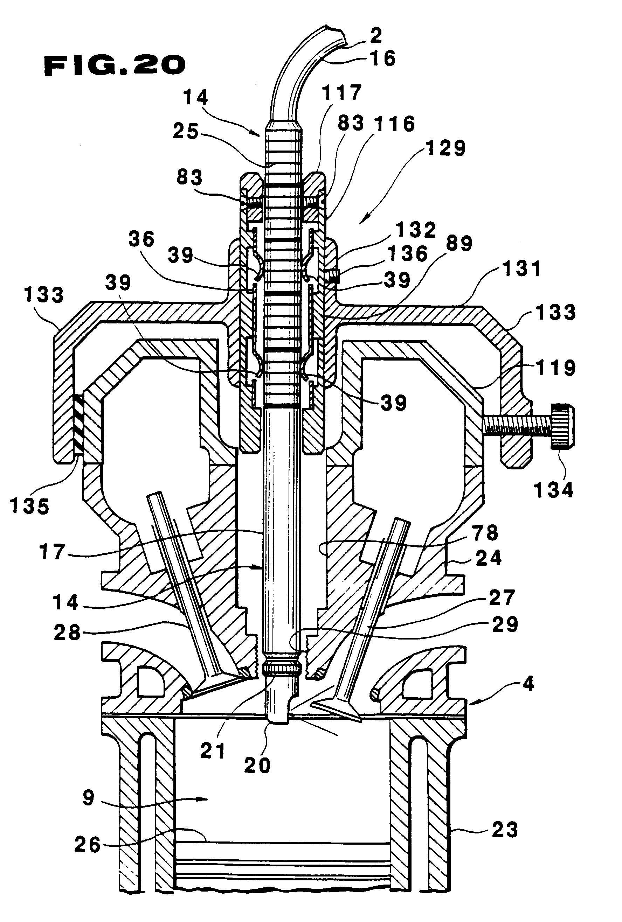

Fig. 20 relates to the eighth embodiment of the present invention and is an explanatory view of a holding apparatus.

### Detailed Description of the Working Modes:

The embodiments of the present invention shall be concretely explained in the following with reference to the drawings.

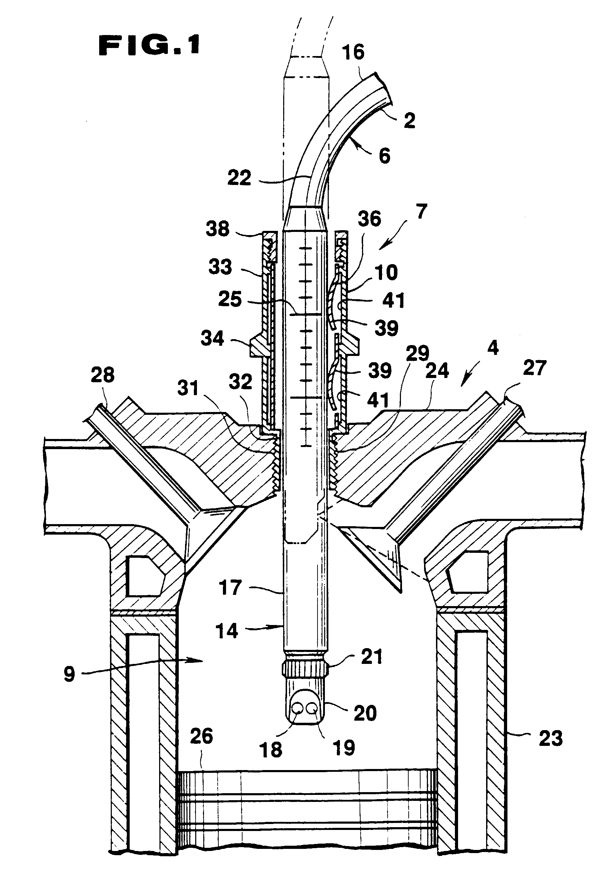

Figs. 1 to 6 show the first embodiment of the present invention.

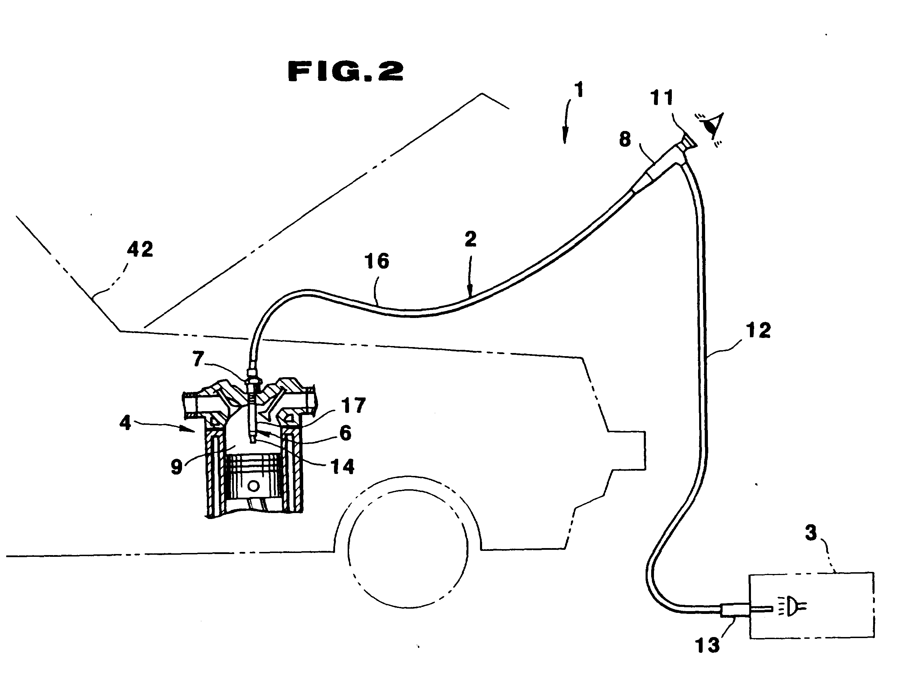

In Fig. 2, an engine 4 is fitted with a holding apparatus 7 by which an insertable part 6 of an endoscope 2 is held at the tip and is led into the combustion chamber9.The endoscope 2 formes an endoscope apparatus 1 together with a light source apparatus 3 so as to be fed with an illuminating light from the light source apparatus.

The above mentioned endoscope 2 is provided with a thick operating part 8 connected to the above mentioned insertable part 6 at the rear end, with an eyepiece part 11 for naked eye observing the combustion chamber 9 of the engine 4 at the rear end of this operating part 8 and further with a light guide cable 12 through which a light guide not illustrated is inserted and which is extended out of the side of the operating part 8. A connector 13 provided at the rear end of this light guide cable 12 is connected to the above mentioned light source apparatus 3 so as to transmit the illuminating light output by the light source apparatus 3 into the combustion chamber 9.

By the way, the light source apparatus 3 is preferably of an antidetonation specification and the current source may be of either of alternating and direct currents (of a battery or car battery).

The above mentioned insertable part 6 is provided with a tip portion 14 and flexible portion 16 as connected from the tip side. The tip portion 14 is provided with a tip body 17 formed of a rigid metal or the like. A tip attachment 20 which can change the visual field direction or view angle is removably fitted to the tip body 17 in the front part.

By the way, the tip body 17 may be formed of plastics.

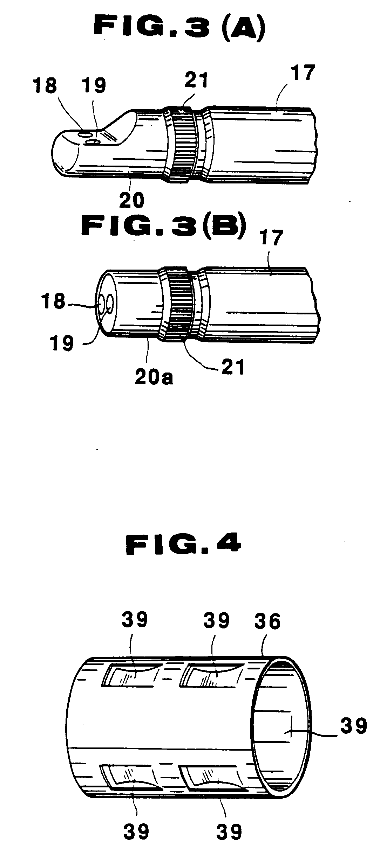

The above mentioned tip attachment 20 is a side viewing type tip attachment 20 provided on the outer peripheral wall with an objective lens system 18 and light distributing lens system 19 as shown in Fig. 3(A) so that an observation in the direction of right angles with the tip body inserting direction may be made. The objective lens system 18 and the light distributing lens system 19 are provided in the same position with respect to the lengthwise direction axis to eliminate the parallax of the light distribution. By the way, the light distributing lens system 19 is to radiate the illuminating light output from the above mentioned light source apparatus 3 into the combustion chamber 9. The tip body 17 is provided with a rotatable knurled ring 21 so that, when this knurled ring 21 is rotated, a screw part (not illustrated)of the tip attachment 20 and a screw part (not illustrated) of the knurled ring 21 will be screwed with each other to fix the tip attachment 20 to the tip body 17.

Aside from the side viewing type tip attachment shown in Fig. 3(A), a straight viewing type tip attachment 20a shown in Fig. 3(B) can be fitted to the tip body 17 by the same method. This straight viewing type tip attachment 20a is provided on the tip surface with an objective lens system 18 and a light distributing lens system 19 so that an observation in the tip body inserting direction may be made.

By the way, aside from the side viewing and straight viewing, an oblique viewing type tip attachment may be fitted.

On the rear outer peripheral surface of the tip body 17, in the lengthwise direction of the insertable part 6, in a position coinciding with the observing direction of the lens systems 18 and 19 of the side viewing or oblique viewing tip attachment 20, an observing direction indicating line 22 is provided so as to lead to the flexible portion 16. An inserted depth scale 25 by which the inserted depth of the tip body 17 inserted into the combustion chamber 9 can be measured is provided on this observing direction indicating line 22. With this observing direction indicating line 22 and the inserted depth scale 25, the inspector can know the observing direction and position within the combustion chamber 9.

The entrance end surface of an image guide not illustrated is provided in the image forming position of the above mentioned objective lens system 18. This image guide is inserted through the insertable part 6 to transmit an observed image to the above mentioned eyepiece part 11. The length of this image guide is, for example, 70 cm. The number of component filaments of the image guide is 20,000 filaments. The view angle of the objective lens system 18 is 80 degrees.

On the other hand, as shown in Fig. 1, the engine 4 is formed of a cylinder block 23, cylinder head 24 and piston 26. The cylinder head 24 is provided with a suction valve 27 and exhaust valve 28. In the upper part of the cylinder head 24 and between the suction valve 27 and exhaust valve 28, a spark plug fixing female screw part 29 is provided as a spark plug hole into which a spark plug not illustrated is to be screwed. A fixing body 10 as a holding means forming the above mentioned holding apparatus 7 is screwed into this spark plug fixing female screw part 29, is formed to be substantially cylindrical and is provided with a small diameter part 32 having a male screw part 31 as a second fixing means screwed with the above mentioned female screw part 29 and a large diameter part 33 provided above this small diameter part 32 and outside the combustion chamber 9. A hexagonal nut part 34 is formed in the upper part of the large diameter part 33 and is of the same contour as of the nut part of the spark plug so that the plug wrench for fitting and removing the spark plug may be used.

By the way, it is preferable that the maximum outside diameter of the holding apparatus 7 should not exceed the outside diameter of the plug wrench for fitting and removing the spark plug, because so many various parts are usually arranged around the engine or plug that the access of the endoscope 2 to the spark plug fixing female screw part 29 is not easy. However, the engine is generally designed so that the plug may be fitted and removed with the plug wrench without disassembling other parts, that is to say, a space large enough to bring the plug wrench near to the spark plug fixing female screw part 29 is secured. Therefore, unless the holding apparatus 7 exceeds the thickness of the plug wrench, it will be always able to be fitted and removed. In this embodiment, the largest outside diameter part of the holding apparatus 7 is the nut part 34 which is of the same contour as the hexagonal contour of the spark plug. Therefore, the holding apparatus can be fitted to and removed from the spark plug fixing female screw part 29 as easily as the plug with the ordinary plug wrench. By the way, though not illustrated, if a magnet is used for the above mentioned hexagonal nut part 34, the plug wrench and holding apparatus 7 will become integral to be easy to fit and remove.

A substantially tubular fixing spring 36 as such elastic fixing means as is shown in Fig. 4 is rotatably inserted in the fixing body 10 and is prevented from dropping out by an annular fitting ring 38 screwed in on the upper inner peripheral surface of the fixing body 10. Grooves 41 are annularly made on the inner peripheral wall of the fixing body 10 to reduce the contact surface of the fixing spring 36 with the inner peripheral surface of the fixing body 10 so that, in case the fixing spring 36 rotates within the fixing body 10, the friction force may be as small as possible.

In all, six plate spring parts 39 in two rows in the lengthwise direction and in three places in the peripheral direction are incised and formed on the peripheral wall of the fixing spring 36 and are formed to be substantially arcuate to project as curved on the inside diameter side so as to press with a proper force the outer peripheral wall of the tip body 17 inserted through the fixing spring 36. The force of this fixing spring 36 to press the tip body 17 is of such size that, in case the hand is released off the tip body 17, the tip body 17 may not drop down and that, in case the tip body 17 is to be moved by hand in the lengthwise direction, it may move without difficulty.

In the case of rotating the tip body 17, that is, in the case of changing the observing direction, if the operating part 8 is twisted, with it, the tip body 17 and fixing spring 36 will rotate wich respect to the fixing body 10.

By the way, the tip body 17 in contact with the fixing spring 36 may be, for example, of stainless steel or plastics having a hardness suited for a stabilized moving resistance. The length of the tip body 17 in contact with the fixing spring 36 is the minimum length required to observe the interior of the combustion chamber 9 so as to be easy to insert the tip body 17 into the combustion chamber 9.

The operation of the holding apparatus 7 formed as mentioned above shall be explained.

The spark plug fitted to the engine 4 of an automobile 42 is removed and the fixed body 10 is screwed into the spark plug fixing female screw part 29 and is fixed with the plug wrench. Depending on what part is to be observed within the combustion chamber 9, the tip attachment 20 is selected and is fixed to the tip body 17. Then, the tip body 17 is inserted into the fixing body 10 by being pushed in by hand to the most proper position while observing the inserted depth scale 25 of the tip body 17. With the insertion, the tip body 17 presses and energizes the plate spring parts 39 of the fixing spring 36 and is inserted into the combustion chamber 9. The energizing force of the plate spring parts 39 is such that, even in case the hand is released off the tip body 17, it may not drop down and that the tip body 17 may be pulled out without difficulty.

In case such tip attachment 20 of the inserted depth and side viewing type as is shown by the two-point chain lines in Fig. 1 is selected, the back side of the suction valve 27 or exhaust valve 28 and the upper inside surface of the combustion chamber 9 will be able to be observed. The inspector observes the interior of the combustion chamber 9 from the eyepiece part 11. In case the periphery of the upper part of the inside wall of the combustion chamber 9 is wanted to be observed, if the operating part 8 is twisted, the tip body 17 will make a sliding surface in the position of contact of the fixing body 10 with the fixing spring 36 and will rotate together with the fixing spring 36 so as to be able to make an observation in the peripheral direction. In this case, the inspector can easily know what position within the combustion chamber 9 is being observed by inspecting the observing direction indicating line 22.

Now, in the case of observing the lower part of the combustion chamber 9 with the visual field direction as side viewing, the tip body 17 is further pushed down to be inserted. In the case of changing the visual field direction, the tip body 17 is pulled out, the tip attachment 20 is replaced and the tip body 17 is again inserted into the fixing body 10.

That is to say, in the case of inspecting the upper surface of the piston 26, the tip body 17 is pulled out, the straight viewing type tip attachment 20a is fitted and the tip body 17 is inserted into the fixing body 10.

On the other hand, in the case that the observing magnification is wanted to be changed, also the tip body 17 is once pulled out and the attachment is replaced with a side viewing or straight viewing attachment of any required view angle.

As described above, according to this embodiment, the tip body 17 is held by the fixing spring 36 and therefore can be stably and stationarily held in any desired position within the combustion chamber 9 of the engine 4.

Also, in this embodiment, if the straight viewing type tip attachment 20a is selected for the piston head and the side viewing type tip attachment 20 is selected for the back side of the suction valve 27 or exhaust valve 28 and for the inside wall surface of the cylinder, the observation will be able to be made with the best angle. By the way, in the case of an engine which is not of a center plug type in which the center axis of the cylinder and the center axis of the spark plug fixing female screw part 29 coincide with each other as in Fig. 1, the observation can be made by using the oblique viewing type tip attachment.

In this embodiment, the straight viewing and side viewing observations can be made by selecting the tip attachments 20 and 20a. However, the lens system may be made movable to continuously obtain the straight viewing, oblique viewing and side viewing. Also, the rearward oblique viewing may be made. Further, the visual field angle, brightness (F No.) and object field depth may be determined respectively to be of the most pertinent values by the respective visual field directions.

By the way, at present, the plug fixing screws are of M12 and M14. So as to be able to be used for both engines, an M12 fixing body and M14 fixing body different only in the male screw part 31 may be prepared to be interchangeably used for one endoscope.

Also, two M12 and M14 endoscopes may be prepared. In this case, the M14 endoscope can be made large in the diameter of the insertable part so that the picture quality and brightness of the observed image may be improved. Further, a fixing body having another male screw part than of the metric screw may be prepared.

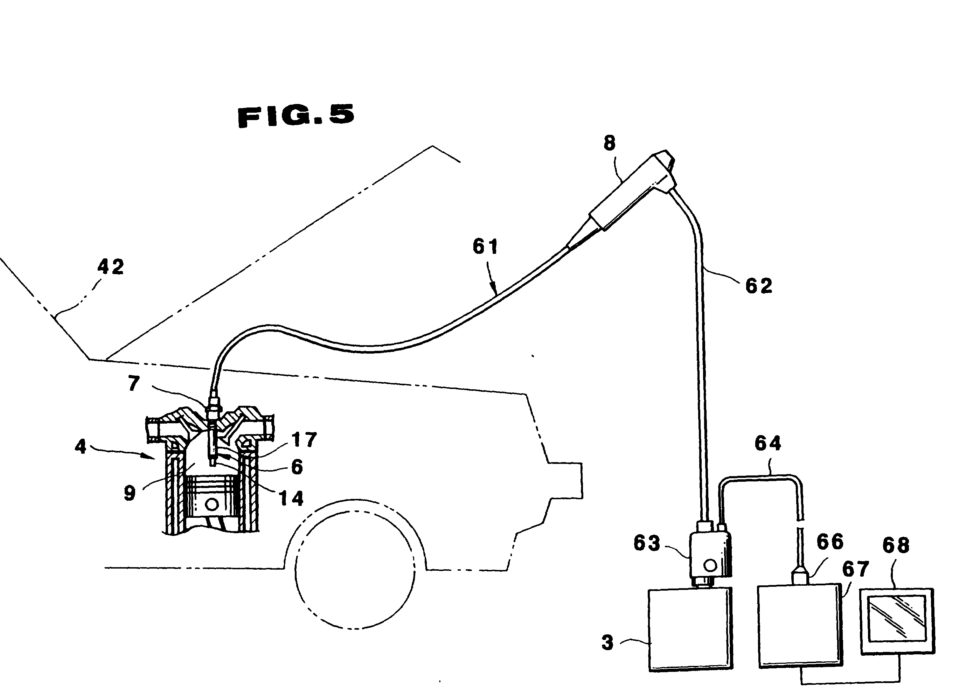

By the way, in this embodiment, the optical endoscope having the image guide has been described but such electronic endoscoope as is shown in Fig. 5 may be used.

In Fig. 5, the same as in the above mentioned endoscoope 2, an electronic endoscope 61 has an insertable part 6 provided with a tip body 17 and an operating part 8 provided as connected to this insertable part 6. A universal cord 62 is extended out of this operating part 8. A light source connector 63 provided at the tip of this universal cord 62 is connected to a light source apparatus 3. A signal cable 64 is extended out of the light source connector 63 and a signal connector 66 provided at the tip of this signal cable 64 is connected to a video processor 67 which is connected to a monitor 68.

A solid state imaging device not illustrated is provided within the above mentioned tip body 17 so that an object image obtained from an objective lens system 18 may be formed on this solid state imaging device by which the object image is photoelectrically converted and is output as an electric signal to the video processor 67 through the universal cord 62 and signal cable 64. The video processor 67 processes as predetermined the input electric signal and outputs a video signal to the the monitor 68 which displays the object image.

When the inspection is thus made with the electronic endoscope 61, the inspected part will be able to be simply recorded by a video tape recorder or the like.

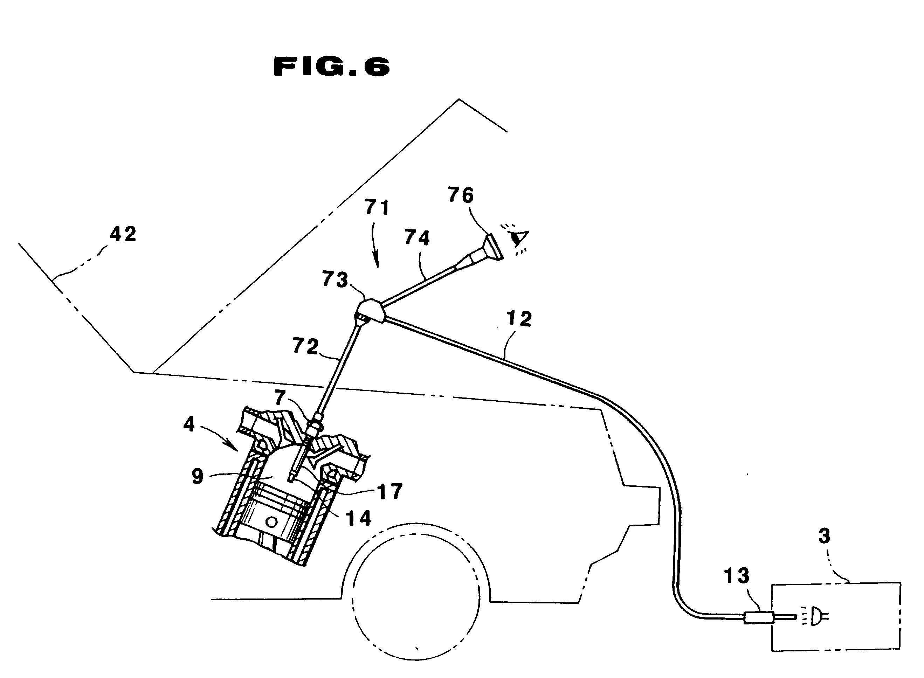

Also, the above mentioned endoscopes 2 and 61 have the flexible insertable part 6 but, as shown in Fig. 6, a rigid endoscope may also be used.

In Fig. 6, a rigid endoscope 71 has an insertable part 72 provided with a tip body 17 and an operating part 73 connected to this insertable part 72 at the rear end. An image guide pipe 74 and light guide cable 12 are extended out of the operating part 73. The image guide pipe 74 is provided at the rear end with an eyepiece 76. The light guide cable 12 is provided at the rear end with a connector 13 connected to a light source apparatus 3.

An image guide or relay lens not illustrated is inserted through the above mentioned image guide pipe 74 so as to transmit to the eyepiece 76 an object image obtained from an objective lens system 18.

By the way, the insertable part 72 is provided rotatably with respect to the operating part 73 so that, when it is rotated, the observing direction within the combustion chamber may be changed.

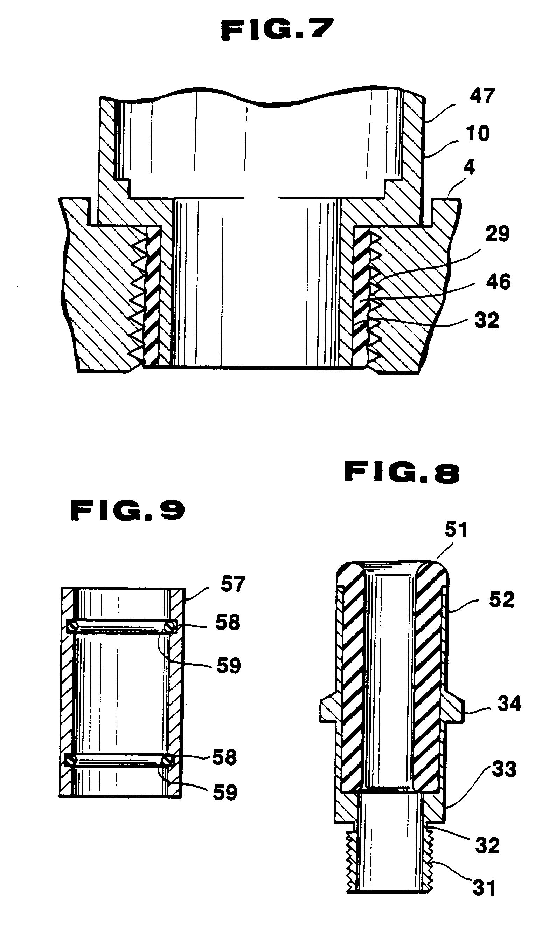

Fig. 7 relates to the second embodiment of the present invention and is an enlarged view of a spark plug fixing female screw part.

In this embodiment, instead of the male screw part 31 provided in the small diameter part 32 in the first embodiment, such elastic member 46 as, for example, of rubber is provided as a second fixing means. The other formations are the same as in the first embodiment, shall bear the same reference numerals and shall not be explained here.

In this embodiment, a fixing body 47 has a tubularly formed elastic member 46, for example, of rubber externally fitted and fixed to a small diameter part 32. This elastic member 46 is of an outside diameter larger than the inside diameter of the spark plug fixing female screw part 29 so as to be energized when inserted into the spark plug fixing female screw part 29. The fixing body 47 is fixed to the engine 4 by this energizing force.

In this embodiment, as the fixing body 47 is fixed to the engine 4 by elastically deforming the elastic member 46, the fixing body 47 can be easily fitted and removed.

The other operations and effects are the same as in the first embodiment.

Fig. 8 relates to the third embodiment of the present invention and is a sectioned view of a fixing body.

In this embodiment, instead of the fixing spring 36 in the first embodiment, an elastic member 51 is provided and the fitting ring 38 is omitted. The other formations are the same as in the first embodiment, shall bear the same reference numerals and shall not be explained here.

In this embodiment, a fixing body 52 has a tubularly formed elastic member 51, for example, of rubber as a first fixing member internally fitted and fixed to it. This elastic member 51 has an inside diameter somewhat smaller than the outside diameter of the tip body 17 so as to be expanded in the diameter and to generate an energizing force in the elastic member 51 when the tip body 17 is inserted. The tip body 17 can be stably and stationarily held by this energizing force.

In this embodiment, in case the tip body 17 is rotated, some resistance will be produced. However, the formation is simpler than in the first embodiment.

Fig. 9 relates to the fourth embodiment of the present innvention and is a sectioned view of a fixing member.

In this embodiment, instead of the fixing spring 36 in the first embodiment, a fixing member 57 is provided. The other formations are the same as in the first embodiment, shall bear the same reference numerals and shall not be explained here.

In this embodiment, the fixing member 57 is formed to be tubular and is provided rotatably within the fixing body 10 in the first embodiment. O-ring grooves 58 fitted with O-rings 59 as first fixing means are annularly provided in two upper and lower places on the inner peripheral surface of this fixing member 57. These O-rings 59 have inside diameters somewhat smaller than the outside diameter of the tip body 17 so as to be expanded in the diameters and to be energized when the tip body 17 is inserted into the fixing member 57. The tip body 17 can be stably and stationarily held by this energizing force.

In this embodiment, as the fixing member 57 is provided rotatably within the fixer body 10, the tip body 17 can be easily rotated. That is to say, the observing direction can be easily changed.

The other operations and effects are the same as in the first embodiment.

Figs. 10 to 17 show the fifth embodiment of the present invention.

In this embodiment, the holding apparatus is used for an engine of an overhead camshaft system in which a camshaft is arranged in a cylinder head.

By the way, the same component members as in the first embodiment shall bear the same reference numerals and shall not be explained here.

The engine of the overhead cam shaft system is provided above a cylinder head 24 with a space for housing a cam shaft. Therefore, a spark plug fixing female screw part 29 is positioned in the depth of a spark plug inserting hole 78. In this case, if the nut part 34 is provided around the fixing body 10 as in the first embodiment, it will contact an inserting hole 78 and will not be able to be inserted. Therefore, in this embodiment, the nut part 34 is not formed around a fixing body 79 but, instead, a cap 82 is fixed by screws 83 to the upper part of the fixing body 79 exposed out of the spark plug inserting hole 78 and a nut part 81 is formed on this cap 82.

Also, the fixing body 79 is formed to be longer than the fixing body 10 in the first embodiment so as to be able to be inserted into the deep spark plug inserting hole 78.

By the way, the spark plug inserting hole 78 forms a spark plug hole together with the spark plug fixing female screw part 29.

The other formations and operations are the same as in the first embodiment.

In this embodiment, the nut part 34 is not provided on the outer periphery of the fixing body 79 but the fixing body 79 is formed to be long and therefore can be used for an engine of an overhead camshaft system having the deep spark plug inserting hole 78.

The other effects are the same as in the first embodiment.

Also, as shown in Figs. 11 to 14, dirt may be prevented from entering the engine 4.

In Fig. 11, a lid 97 closing an inserting path through which the tip body 17 is inserted is provided on the upper surface of the cap 82. A pin 99 as a rotation fulcrum provided on the cap 82 is passed through a projection 98 provided on the peripheral edge of the lid 97. A pawl 101 is formed on the peripheral edge of the lid 97 opposed to this projection 98 and is to be engaged with a pin 102 provided on the cap 82. A handle 103 is provided near the pawl 101 of the lid 97.

A coil spring 104 fixed respectively at one end to the cap 82 and at the other end to the lid 97 is wound on the pin 99 as the above mentioned rotation fulcrum and is energized so that the pin 102 and pawl 101 may be always engaged with each other

In case the tip body 17 is to be inserted, the handle 103 is held and the lid 97 is rotated counter-clockwise with the pin 99 as a fulcrum against the energizing force of the coil spring 104 so that the tip body 17 may be inserted into the fixing body 86.

After the tip body 17 is inserted, the handle 103 is released and an observation is made. In case the observation ends, the tip body 17 is pulled out of the fixer body 86. Then, the lid 97 is rotated clockwise as in Fig. 14 with the pin 99 as a fulcrum by the energizing force of the coil spring 104 and the pawl 101 is engaged with the pin 102.

The lid 97 can not close the gap between the fixer body 86 and tip body 17 in case the tip body 17 is inserted but can close the inserting path in case the tip body 17 is pulled out so as to be able to prevent dirt from entering the engine 4.

In Fig. 15, instead of the observing direction indicating line 22 provided in the lengthwise direction of the tip body 17 and shown in Fig. 10, an observing direction indicating member 106 is provided.

The above mentioned observing direction indicating member 106 is like an elongate plate, is inserted in the lengthwise direction through the gap between the tip body 17 and cap 82, is fixed at one end to the upper part of the fixing spring 36 and is exposed out at the other end. The exposed end of the observing direction indicating member 106 is bent in the outside diameter direction to form an observing direction pointer 107.

In case the tip body 17 is to be inserted into the fixing body 86, the observing direction of the objective lens system 18 and the observing direction pointer 107 are made to coincide with each other. As the fixing spring 36 is rotated integrally with the tip body 17 bY the plate spring parts 39, when the tip body 17 rotates, the pointer 107 will rotate with it and will therefore indicate the observing direction within the engine.

Fig. 17 shows a flexible endoscope 109 having a curvable part 108 and a holding apparatus 85 in this embodiment as used in combination.

The insertable part 111 of the above mentioned endoscope 109 is removably fitted at the tip with a side viewing type tip attachment 20, is provided in the rear of the tip with the curvable part 108 and is further provided at the end of the curvable part 108 with a flexible part 112.

The above mentioned curvable part 108 can be curved by a curving operation knob provided an operating part not illustrated so as to be able to change the observing direction within the engine 4 when curved. Therefore, in order to change the observing direction, the insertable part 111 need not be pulled out of the engine 4.

Fig. 18 relates to the sixth embodiment of the present invention and is an explanatory view of a holding apparatus.

The holding apparatus 114 of this embodiment is the fixing body 79 of the fifth embodiment in which the fixing means with the engine 4 is removed.

The fixing body 116 as a holding means of this embodiment is the fixing body 79 of the fifth embodiment in which the male screw part 31 is removed and the holding apparatus 114 is only inserted into the spark plug inserting hole 78. Therefore, as the fixing body 116 is not required to be screwed into the spark plug fixing female part 29, the cap 117 fitted to the upper part of the fixer body 116 is the cap 82 described in the fifth embodiment in which the nut part 81 is removed.

In case the above mentioned holding apparatus 114 is to be led into the engine 4, the tip body 17 as fitted with the holding apparatus 114 is inserted into the spark plug inserting hole 78 and the tip attachment 20 is positioned within the combustion chamber 9.

The other formations and operations are the same as in the fifth embodiment.

In this embodiment, as the holding apparatus 114 is not required to be screwed into the spark plug fixing female screw part 29, the holding apparatus 114 can be simply fitted to and removed from the engine 4.

The other effects are the same as in the first embodiment.

Fig. 19 relates to the seventh embodiment of the present invention and is an explanatory view of a holding apparatus.

The engine 4 in this embodiment is the engine 4 of the overhead camshaft system having the camshaft in the upper part of the cylinder head 24 and described in the fifth embodiment.

The suction valve 27 and exhaust valve 28 of the above mentioned engine 4 are respectively opened and closed by the above mentioned camshaft not illustrated. This camshaft is housed within a rocker chamber 118 covered with a cam cover 119. The spark plug inserting hole 78 communicating with the spark plug fixing female screw part 29 provided in the upper central part of the combustion chamber 9 is provided in the cam cover 119.

By the way, the spark plug inserting hole 78 forms a spark plug hole together with the spark plug fixing female screw part 29.

The holding apparatus 120 in this embodiment is not to be screwed into the spark plug fixing female screw part 29 but is to be fixed to the spark plug inserting hole 78. The fixing body 121 as a holding means in this embodiment is the same fixing body 116 as of the sixth embodiment as externally fitted and fixed with a fixing member 122 as a second fixing means formed to be substantially tubular of rubber or the like.

A first flange 123 having an outside diameter somewhat larger than the inside diameter of the spark plug inserting hole 78 and a second flange 124 are peripherally provided respectively on the lower and upper outer peripheral walls of the above mentioned fixing member 122.

The above mentioned second flange 124 has a large diameter part 126 and a small diameter part 127 formed to be of an outside diameter smaller than of the large diameter part 126 and somewhat larger than the inside diameter of the spark plug inserting hole 78. The large diameter part 126 contacts the cam cover 119 to cover the inserting hole 78 from the upper surface of the cam cover 119. The small diameter part 127 is inserted into the spark plug inserting hole 8 to press in the outside diameter direction this spark plug inserting hole 78 on the inner surface together with the first flange 123 and to fix the holding apparatus 120 in the spark plug inserting hole 78.

In case the above mentioned holding apparatus 120 is to be fitted to the engine 4, the fixing body 121 externally fitted with the fixing member 122 is pushed into the spark plug inserting hole 78. Then, the first flange 123 and small diameter part 127 will be pressed by the inner peripheral wall surface of the inserting hole 78 and the reaction of this pressing force will become a holding force holding the holding apparatus 120.

The other formations and operations are the same as in the sixth embodiment.

In this embodiment, as the fixing member 122 is formed of an elastic material and the holding apparatus 120 is held in the spark plug inserting hole 78 by elastically deforming this fixing member 122, in case the holding apparatus 120 is to be fitted to the engine 4, it can be simply fitted and removed without requiring any special tool.

The other effects are the same as in the first embodiment.

Fig. 20 relates to the eighth embodiment of the present invention and is an explanatory view of a holding apparatus.

The holding apparatus 129 of this embodiment is the fixing body 116 described in the sixth embodiment as provided with a holding jig 131 as a second fixing means.

In the above mentioned holding jig 131, a pipe part 132 into which the fixing body 116 is to be inserted is provided in the central part and L-like arm parts 133 are provided from the middle part of the outer peripheral wall of the pipe part 132 so as to turn round into the side surface from the upper surface of the cam cover 119.

A plate-like rubber member 135 is fitted to a part of the above mentioned one arm part 133 facing the side surface of the cam cover 119 so as to contact the side surface of the cam cover 119.

A screw 134 is screwed into the other arm part 133 so as to contact at the tip with the side surface of the cam cover 119.

On the other hand, a set screw 136 is screwed in the diametral direction into the pipe part 132 so as to fix the fixing body 116 and holding jig 131 when this set screw 136 is pressed against the outer peripheral wall surface of the fixing body 116.

In case the above mentioned holding apparatus 129 is to be fitted to the engine 4, the fixing body 116 is fixed to the holding jig 131 with the set screw 136 to fix the holding apparatus 129 to the engine 4 by screwing in the screw 134. When the screw 134 is screwed in, it will press at the tip the cam cover 119 on the side surface to hold the cam cover 119 from the right and left with the screw 134 and rubber member 135 to fix the holding jig 131 to the engine 4.

Then, the tip body 17 is inserted and the tip attachment 20 is positioned within the combustion chamber 9.

The other formations and operations are the same as in the sixth embodiment.

Also, though not illustrated, the fixing screws 134 may be provided in both arm parts 133. In such case, the axial centers of the holding jig 131 and spark plug inserting hole 78 will be adjustable and the endoscope will be able to be positioned in the center of the spark plug inserting hole 78.

In this embodiment, the spark plug inserting hole 78 is provided in the central part of the engine 4. However, even in case this spark plug inserting hole 78 is not located in the central part of the engine 4, if the holding jig 131 is replaced, the interior of the combustion chamber 9 will be able to be inspected.

The other effects are the same as in the first embodiment.

By the way, in the above mentioned respective embodiments, a light source apparatus 3 is provided and the interior of the combustion chamber 9 is observed with the illuminating light from this light source apparatus 3. However, the insertable part of the endoscope may be provided with a tip lamp so that an observation may be made with the illuminating light emitted from this tip lamp.

As explained above, according to the present invention, the endoscope tip can be stably and stationarily held in any desired position within the engine combustion chamber 9.

## Claims

1. An endoscope apparatus comprising
an endoscope (2; 61; 71; 109) having an insertable part (6; 72, 111), said insertable part being insertable through an ignition plug inserting hole (78) into a combustion chamber of an internal combustion engine for visually inspecting the interior thereof, and
a holding means (7; 85; 114; 120; 129; 137; 140; 143) for holding an elastic fixing means (36; 51; 57; 59) at said inserting hole (78) of said engine (4), said elastic fixing means (36; 51; 57; 59) holding the insertable part by pressing and fixing the periphery of the insertable part of the endoscope,
wherein said elastic fixing means (36; 51; 57; 59) has in a non-deformed condition an inside diameter which is smaller than the outer diameter of the insertable part (6; 72; 111).

2. An apparatus according to claim 1,
further comprising an observing position setting means (22, 25, 107, 141, 148) for setting an observing position within said combustion chamber (9) of said engine (4).

3. An apparatus according to claim 1 or 2,
wherein said holding means further includes a second fixing means (31; 46; 131; 138; 139; 149) for fixing said holding means to said engine (4).

4. An apparatus according to any of claims 1 to 3,
wherein said elastic fixing means is a spring member (36) for holding said insertable part (6) by pressing said insertable part on the periphery thereof.

5. An apparatus according to claim 3 or 4,
wherein said second fixing means is a screw part (31) to be threaded into said ignition plug hole (78) for fixing said holding means (7, 85) to said engine (4).

6. An apparatus according to claim 3 or 4,
wherein said second fixing means is an elastic member (46, 149) to be inserted into said ignition plug hole (78) for fixing said holding means to said engine (4).

7. An apparatus according to claim 6,
wherein said elastic member (46) is to be inserted between a spark plug screw part (29) forming said ignition plug hole (78) and said holding means.

8. An apparatus according to claim 6,
wherein said elastic member (149) is to be inserted between a spark plug inserting hole (78) forming said ignition plug hole and said holding means.

9. An apparatus according to claim 7 or 8,
wherein said elastic member (46, 149) is a cylindrically formed rubber.

10. An apparatus according to claim 3,
wherein said elastic fixing means is an elastic member (51; 59) for holding said insertable part (6) by pressing said insertable part on the periphery, and said second fixing means is a screw part (31) screwed into said ignition plug hole (78) for fixing said holding means to said engine (4).

11. An apparatus according to claim 10,
wherein said elastic member (51; 59) is a cylindrically formed rubber or an O-ring (59).

12. An apparatus according to claim 3,
wherein said elastic fixing means is a spring member (36) for holding said insertable part (6) by pressing said insertable part on the periphery, and said second fixing means is a holding jig (131) fixable to a cam cover (119) of said engine (4).

13. An apparatus according to claim 2,
wherein said observing position setting means is provided on said insertable part (6) and comprises an inserted depth scale (25) which can measure the amount of said insertable part (6) inserted into said combustion chamber (9) and an observing direction indicating line (22) provided in the lengthwise direction of said insertable part coinciding with the observing direction of said endoscope.

14. An apparatus according to claim 4,
wherein said spring member (36) is provided with an observing position setting means (107) for setting the observing position of said endoscope.

15. An apparatus according to any of the preceding claims,
wherein said holding means is further provided with a foreign matter drop preventing means (97) in an inserting port into which said insertable part (6) is to be inserted.

16. An apparatus according to claim 15,
wherein said foreign matter drop preventing means is a lid (97) which will close said inserting port by a spring force in case said insertable part is pulled out of said holding means.

17. Endoscope apparatus according to any of the preceding claims,
wherein
the endoscope (2, 61, 71, 109) further comprises an observing window (18) provided in the tip portion (14) of the insertable part (6, 72, 111) for observing the interior of said combustion chamber (9), an illuminating window (19) provided in the tip portion (14) of the insertable part (6, 72, 111) for illuminating the interior of said combustion chamber (9) and an operating part (8) connected to said insertable part at the rear end thereof,
and
a light source apparatus (3) connected to said endoscope to feed said endoscope with the illuminating light emitted from said illuminating window (19).

18. Endoscope apparatus according to claim 17,
wherein said operating part (8) has an eyepiece part (11) whereby an object image taken in from said observing window (18) can be observed.

19. Endoscope apparatus according to claim 17 or 18,
wherein said endoscope is a flexible endoscope (109) in which a part of said insertable part (111) is flexible.

20. Endoscope holding apparatus according to claim 17 or 18,
wherein said endoscope is a rigid endoscope (71) in which said insertable part (72) is in all rigid.

21. Endoscope apparatus according to claim 17 or 18,
wherein said endoscope is an electronic endoscope (61).

22. Endoscope apparatus according to any of claims 17 to 21,
wherein said endoscope is removably provided with a visual field changing adapter (21) for changing the visual field direction of said endoscope in the tip part of said insertable part.

23. Endoscope apparatus according to any of the claims 17, 18, 19, 21 and 22,
wherein said insertable part (111) to be inserted into said combustion chamber (9) of said endoscope (109) is provided with a curvable part (108) which can change the observing direction of said endoscope.

## Patentansprüche

1. Endoskopvorrichtung, aufweisend:
ein Endoskop (2; 61; 71; 109) mit einem einführbaren Teil (6; 72; 111), wobei das einführbare Teil durch ein Zündkerzen-Einführungsloch (78) in eine Verbrennungskammer einer innen gelegenen Verbrennungsmaschine zum visuellen Betrachten von deren Innenraum einführbar ist, und
eine Halteeinrichtung (7; 85; 114; 120; 129; 137; 140; 143) zum Halten einer elastischen Befestigungseinrichtung (36; 51; 57; 59) an dem Einführloch (78) der Maschine (4), wobei die elastische Befestigungseinrichtung (36; 51; 57; 59) das einführbare Teil durch Drücken und Befestigen des Umfangs des einführbaren Teils des Endoskops hält,
wobei die elestische Befestigungseinrichtung (36; 51; 57; 59) in einem nicht deformierten Zustand einen innenseitigen Durchmesser aufweist, der geringer als der äußere Durchmesser des Einführteils (6; 72; 111) ist.

2. Vorrichtung nach Anspruch 1,
ferner aufweisend eine Betrachtungslage-Einstelleinrichtung (22, 25, 107, 141, 148) zum Setzen einer Betrachtungslage innerhalb der Verbrennungskammer (9) des Motors (4).

3. Vorrichtung nach Anspruch 1 oder 2,
wobei die Halteeinrichtung ferner eine zweite Befestigungseinrichtung (31; 46; 131; 138; 139; 149) zum Befestigen der Halteeinrichtung an dem Motor (4) umfaßt.

4. Vorrichtung nach einem der Ansprüche 1 bis 3,
wobei die elastische Befestigungseinrichtung ein Federelement (36) zum Halten des einführbaren Teils (6) durch Drücken des einführbaren Teils an dessen Umfang ist.

5. Vorrichtung nach Anspruc 3 oder 4,
wobei die zweite Befestigungseinrichtung ein Schraubenteil (31) ist, das zum Befestigen der Halteeinrichtung (7, 85) an dem Motor (4) in das Zündkerzenloch (78) einschraubbar ist.

6. Vorrichtung nach Anspruch 3 oder 4,
wobei die zweite Befestigungseinrichtung ein elastisches Element (46, 49) ist, das zum Befestigen der Halteeinrichtung an dem Motor (4) in das Zündkerzenloch (78) einzusetzen ist.

7. Vorrichtung nach Anspruch 6,
wobei das elastische Element (46) zwischen ein Funken-Stecker-Schraubteil (29), das das Zünkerzenloch (78) ausbildet, und die Halteeinrichtung einzusetzen ist.

8. Vorrichtung nach Anspruch 6,
wobei das elastische Element (149) zwischen ein Funkenstecker-Einsetzloch (78), das die Zündkerzenöffnung ausbildet, und die Halteeinrichtung einzusetzen ist.

9. Vorrichtung nach Anspruch 7 oder 8,
wobei das elastische Element (46, 149) ein zylindrisch ausgebildetes Gummi ist.

10. Vorrichtung nach Anspruch 3,
wobei das elastische Befestigungselement ein elastisches Element (51; 59) zum Halten des einführbaren Teils (6) durch Drücken des einführbaren Teils an dem Umfang und die zweite Befestigungseinrichtung ein Schraubenteil (31) ist, das in die Zündkerzenöffnung (78) zum Befestigen der Halteeinrichtung an dem Motor (4) geschraubt wird.

11. Vorrichtung nach Anspruch 10,
wobei das elastische Element (51; 59) ein zylindrisch ausgebildetes Gummi oder ein O-Ring (59) ist.

12. Vorrichtung nach Anspruch 3,
wobei die elastische Befestigungseinrichtung ein Federelement (36) zum Halten des einführbaren Teils (6) durch Drücken des einführbaren Teils an dem Umfang, und die zweite Befestigungseinrichtung eine Halte-Spannvorrichtung (131) ist, die an einer Nockenabdeckung (119) des Motors (4) befestigbar ist.

13. Vorrichtung nach Anspruch 2,
wobei die Betrachtungslage-Einstelleinrichtung an dem einführbaren Teil (6) bereitgestellt ist und eine Einführtiefenskala (25) aufweist, die den Betrag des einführbaren Teils messen kann, um den in die Verbrennungskammer (9) eingeführt wird, und eine Betrachtungsrichtung-Anzeigeleitung (22) aufweist, die in der Längsrichtung des einführbaren Teils mit der Betrachtungsrichtung des Endoskops zusammenfallend vorgesehen ist.

14. Vorrichtung nach Anspruch 4,
wobei das Federelement (4) mit einer Betrachtungslage-Einstelleinrichtung (107) zum Einstellen der Betrachtungslage des Endoskops vorgesehen ist.

15. Vorrichtung nach irgendeinem der vorhergehenden Ansprüche,
wobei die Halteeinrichtung ferner mit einer Einrichtung (97) zum Verhindern des Fallens eines Fremdkörpers in eine Einführöffnung versehen ist, in die das einführbare Teil (6) einzusetzen ist.

16. Vorrichtung nach Anspruch 15,
wobei die Einrichtung zum Verhindern des Fallens eines Fremdkörpers ein Deckel (97) ist, der die Einführöffnung mittels einer Federkraft in dem Fall schließt, daß das Einführteil aus der Halteeinrichtung herausgezogen wird.

17. Endoskopvorrichtung nach einem der vorhergehenden Ansprüche, wobei
das Endoskop (2, 61, 71, 109) ferner aufweist ein Betrachtungsfenster (18), das im Spitzenteil (14) des einführbaren Teils (6, 72, 111) zum Betrachten des Inneren der Verbrennungskammer (9) vorgesehen ist, ein Beleuchtungsfenster (19), das in dem Spitzenteil (14) des einführbaren Teils (6, 72, 111) zum Beleuchten des Innenraums der Verbrennungskammer (9) vorgesehen ist, und ein Betätigungsteil (8), das mit dem einführbaren Teil an dessen rückseitigen Ende verbunden ist, und
eine lichtquellenvorrichtung (3), die mit dem Endoskop zum Zuführen von Beleuchtungslicht zum Endoskop verbunden ist, das von dem Beleuchtugnsfenster (19) ausgestrahlt wird.

18. Endoskopvorrichtung nach Anspruch 17,
wobei das Betätigungsteil (8) ein Opularteil (11) aufweist, wodurch ein Gegenstandsbild betrachtet werden kann, das durch das Betrachtungsfenster (18) hereingenommen wird.

19. Endoskopvorrichtung nach Anspruch 17 oder 18,
wobei das Endoskop ein flexibles Endoskop (109) ist, bei dem ein Teil des einführbaren Teils (111) flexibel ist.

20. Endoskophaltevorrichtung nach Anspruch 17 oder 18,
wobei das Endoskop ein starres Endoskop (71) ist, bei dem das Einführteil (72) insgesamt starr ist.

21. Endoskopvorrichtung nach Anspruch 17 oder 18,
wobei das Endoskop ein elektronisches Endoskop (61) ist.

22. Endoskopvorrichtung nach einem der Ansprüche 17 bis 21,
wobei das Endoskop in entfernbarer Weise mit einem Gesichtsfeld-Änderungsadapter (21) zum Ändern der Gesichtsfeldrichtung des Endoskops im Spitzenteil des einführbaren Teils versehen ist.

23. Endoskopvorrichtung nach einem der Ansprüche 17, 18, 19, 21 und 22,
wobei das in die Verbrennungskammer (9) einzuführende einführbare Teil (111) des Endoskops (109) mit einem krümmbaren Teil (108) ausgestattet ist, das die Betrachtungsrichtung des Endoskops ändern kann.

## Revendications

1. Endoscope comprenant:
- un endoscope (2 ; 61 ; 71 ; 109) présentant une partie pouvant être insérée (6 ; 72 ; 111), ladite partie pouvant être insérée pouvant être insérée à travers un trou d'insertion (78) de bougie d'allumage dans une chambre de combustion d'un moteur à combustion interne pour l'examen visuel de l'intérieur de celui-ci; et
- des moyens de support (7 ; 85 ; 114 ; 120 ; 129 ; 137; 140 ; 143) destinés à supporter des moyens de fixation élastiques (36 ; 51 ; 57 ; 59) au niveau dudit trou d'insertion (78) dudit moteur (4), lesdits moyens de fixation élastiques (36 ; 51; 57 ; 59) supportant la partie pouvant être insérée en pressant et en fixant la périphérie de la partie pouvant être insérée de l'endoscope ;
dans lequel lesdits moyens de fixation élastiques (36 ; 51 ; 57 ; 59) présentent dans une condition non déformée un diamètre interne qui est inférieur au diamètre externe de la partie pouvant être insérée (6 ; 72; 111).

2. Endoscope selon la revendication 1, comprenant également des moyens de définition de position d'observation (22, 25, 107, 141, 148) destinés à définir une position d'observation à l'intérieur de ladite chambre de combustion (9) dudit moteur (4).

3. Endoscope selon la revendication 1 ou 2, dans lequel lesdits moyens de support incluent également des seconds moyens de fixation (31 ; 46 ; 131 ; 138 ; 139 ; 149) destinés à fixer lesdits moyens de support audit moteur (4).

4. Endoscope selon les revendications 1 à 3, dans lequel lesdits moyens de fixation élastiques sont un élément de ressort (36) destinés à supporter ladite partie pouvant être insérée (6) en pressant ladite partie pouvant être insérée sur la périphérie de celle-ci.

5. Endoscope selon les revendications 3 ou 4, dans lequel lesdits seconds moyens de fixation sont une partie de vis (31) devant être filetée dans ledit trou de bougie d'allumage (78) pour fixer lesdits moyens de support (7, 85) audit moteur (4).

6. Endoscope selon les revendications 3 ou 4, dans lequel lesdits seconds moyens de fixation sont un élément élastique (46, 149) devant être inséré dans ledit trou de bougie d'allumage (78) pour fixer lesdits moyens de support audit moteur (4).

7. Endoscope selon la revendication 6, dans lequel ledit élément élastique (46) doit être inséré entre une partie de vis (29) de bougie d'allumage formant ledit trou (78) de bougie d'allumage et lesdits moyens de support.

8. Endoscope selon la revendication 6, dans lequel ledit élément élastique (149) doit être inséré entre un trou d'insertion (78) de bougie d'allumage formant ledit trou de bougie d'allumage et lesdits moyens de support.

9. Endoscope selon la revendication 7 ou 8, dans lequel ledit élément élastique (46, 149) est un caoutchouc de forme cylindrique.

10. Endoscope selon la revendication 3, dans lequel lesdits moyens de fixation élastiques (51 ; 59) sont un élément élastique (51 ; 59) destiné à supporter ladite partie pouvant être insérée (6) en pressant ladite partie pouvant être insérée sur la périphérie, et lesdits seconds moyens de fixation élastiques sont une partie de vis (31) vissée dans ledit trou (78) de bougie d'allumage pour fixer lesdits moyens de support audit moteur (4).

11. Endoscope selon la revendication 10, dans lequel ledit élément élastique (51 ; 59) est un caoutchouc de forme cylindrique ou un joint torique (59).

12. Endoscope selon la revendication 3, dans lequel lesdits moyens de fixation élastiques sont un élément de ressort (36) destiné à supporter ladite partie pouvant être insérée (6) en pressant ladite partie pouvant être insérée sur la périphérie, et lesdits seconds moyens de fixation sont un gabarit de support (131) pouvant être fixé à un couvercle de came (119) dudit moteur (4).

13. Endoscope selon la revendication 2, dans lequel lesdits moyens de définition de position d'observation sont disposés sur ladite partie pouvant être insérée (6) et comprennent une échelle de profondeur insérée (25) qui peut mesurer la quantité de ladite partie pouvant être insérée (6) insérée dans ladite chambre de combustion (9) et une ligne indiquant la direction d'observation (22) disposée dans le sens longitudinal de ladite partie pouvant être insérée coïncidant avec la direction d'observation dudit endoscope.

14. Endoscope selon la revendication 4, dans lequel ledit élément de ressort (36) est muni de moyens de définition de position d'observation (107) destinés à définir la position d'observation dudit endoscope.

15. Endoscope selon l'une des revendications précédentes, dans lequel lesdits moyens de support sont également munis de moyens de prévention de chute de corps étranger (97) dans un orifice d'insertion dans lequel ladite partie pouvant être insérée (6) doit être insérée.

16. Endoscope selon la revendication 15, dans lequel lesdits moyens de prévention de chute de corps étranger sont un couvercle (97) qui ferme ledit orifice d'insertion par une force de ressort au cas où ladite partie pouvant être insérée est retirée desdits moyens de support.

17. Endoscope selon l'une des revendications précédentes, dans lequel l'endoscope (2, 61, 71, 109) comprend également une fenêtre d'observation (18) disposée dans la portion supérieure (14) de la partie pouvant être insérée (6, 72, 111) pour observer l'intérieur de ladite chambre de combustion (9), une fenêtre d'illumination (19) disposée dans la portion supérieure (14) de la partie pouvant être insérée (6, 72, 111) pour illuminer l'intérieur de ladite chambre de combustion (9) et une partie de commande (8) connectée à ladite partie pouvant être insérée à l'extrémité arrière de celle-ci ; et une source de lumière (3) reliée audit endoscope pour alimenter ledit endoscope avec la lumière d'illumination émise depuis ladite fenêtre d'illumination (19).

18. Endoscope selon la revendication 17, dans lequel ladite partie de commande (8) présente une partie oculaire (11) par laquelle une image d'objet entrée depuis ladite fenêtre d'observation (18) peut être observée.

19. Endoscope selon la revendication 17 ou 18, dans lequel ledit endoscope est un endoscope flexible (109) dans lequel une partie de ladite partie pouvant être insérée (111) est flexible.

20. Endoscope selon la revendication 17 ou 18, dans lequel ledit endoscope est un endoscope rigide (71) dans lequel ladite partie pouvant être insérée (72) est totalement rigide.

21. Endoscope selon la revendication 17 ou 18, dans lequel ledit endoscope est un endoscope électronique (61).

22. Endoscope selon l'une des revendications 17 à 21, dans lequel ledit endoscope est muni de manière amovible d'un adaptateur de changement de champ visuel (21) pour changer la direction de champ visuel dudit endoscope dans la partie supérieure de ladite partie pouvant être insérée.

23. Endoscope selon l'une des revendications 17, 18, 19, 21 et 22, dans lequel ladite partie pouvant être insérée (111) devant être insérée dans ladite chambre de combustion (9) dudit endoscope (109) est munie d'une partie pouvant être incurvée (108) qui peut changer la direction d'observation dudit endoscope.
